# EUROPÄISCHE PATENTSCHRIFT

(11) **EP 0 543 048 B1**
(45) Veröffentlichungstag und Bekanntmachung des Hinweises auf die Patenterteilung: **16.08.1995**
(21) Anmeldenummer: 91119917.2
(22) Anmeldetag: 22.11.1991
(51) Int. Cl.: B60N 2/24

(54) **Fahrgastsitz**
Passenger seat
Siège de passager

(43) Veröffentlichungstag der Anmeldung: 26.05.1993
(73) Patentinhaber: Ignaz Vogel GmbH & Co KG, Fahrzeugsitze, D-76228 Karlsruhe (DE)
(72) Erfinder: Vogel, Ignaz, W-7500 Karlsruhe 41-Stu. (DE)
(74) Vertreter: Trappenberg, Hans

(56) Entgegenhaltungen:
- EP-A- 0 251 201
- EP-A- 0 306 363
- AT-B- 378 744
- US-A- 3 341 251
- US-A- 3 747 978
- US-A- 3 797 887

## Beschreibung

Die Erfindung betrifft einen Fahrgastsitz zur Bestuhlung von Personenbeförderungs-Fahrzeugen, bestehend aus den zusammenzufügenden Baugruppen Untergestell - Sitzteil - Rückenlehne, wobei, bei Einfachsitzen, auch die beiden Baugruppen Sitzteil und Rückenlehne einstückig zu einer Sitzschale zusammengefaßt sein können, und wobei Sitzteil und Rückenlehne mit einer Polsterung zu versehen sind.

Selbst bei einer Primitiv-Bestuhlung sind heutzutage die Fahrgastsitze gepolstert, weisen also eine Polsterung sowohl des Sitzteiles wie auch der Rückenlehne auf. Diese Polsterung verschleißt in derartigen Massen-Personenbeförderungs -Fahrzeugen sehr schnell und muß daher in kurzen Zeitabständen entweder instandgesetzt oder ausgetauscht werden. Bei Programmwechsel oder Ausmusterung sind im allgemeinen die Metallkonstruktionen eines Fahrgastsitzes noch brauchbar, können jedoch nicht wiederverwertet werden, da sich zwischenzeitlich Maße oder gesetzliche Vorbedingungen geändert haben. Jedoch auch ein Recycling, das heißt eine Wiederverwendung der benutzten Rohstoffe derartiger Fahrgastsitze ist kaum möglich, da vollkommen unterschiedliche und daher auch unterschiedlich zu behandelnde Materialien, wie beispielsweise unterschiedliche Kunststoffe unlösbar miteinander verbunden sind. Eine Aufarbeitung solcher gebracuhter Fahrgastsitze ist daher sowohl aus wirtschaftlichen wie auch aus technologischen Gründen nicht möglich. Da auch eine Rückgewinnung der einzelnen Stoffe durch deren unlösbaren Zusammenhalt ausscheidet, müssen gebrauchte Fahrgastsitze als nicht wiederverwertbar bezeichnet und zum zu deponierenden Abfall gegeben werden.

Aufgabe der Erfindung ist es, einen Aufbau von Fahrgastsitzen anzugeben, der eine Wiederverwendung der einzelnen Baukomponenten oder, falls eine solche Wiederverwendung ausscheidet, zumindest die Rückgewinnung der eingesetzten Stoffe und Materialien erlaubt. Erreicht wird dies in erfindungsgemäßer Weise dadurch, daß nur die geringstmögliche Anzahl der entsprechend dem Gebrauchszweck verwendeten Materialien - Metall-Kunststoff-Gewebe - eingesetzt ist und nur gleichartige Materialien unlösbar miteinander verbunden sind. Durch diese einfache und durchaus durchzuführende Maßnahme wird auf jeden Fall erreicht, daß die Materialien beziehungsweise Stoffe der einzelnen Komponenten, sollten sie in der Ursprungsform nicht mehr verwertbar sein, wieder rückgewonnen und damit wiederverwertet werden können. Auf die Verwendung von Holz beziehungsweise Holzplatten, wie sie bei heutigen Sitzen noch die Regel ist, wird bei einem Sitz nach der Erfindung vollkommen verzichtet. Auf jeden Fall müssen die einzelnen Materialien und Stoffe durch bekannte lösbare Verbindungen wie Schrauben, Clipsen, Einhängen etc. leicht voneinander lösbar, miteinander verbunden sein, um deren Wiederverwertung auf wirtschaftliche Art und Weise zu ermöglichen. Lediglich gleichartige Stoffe und Materialien können dann unlösbar miteinander verbunden werden, wenn deren Wiederverwertung in diesem Zustand ohne Schwierigkeiten möglich ist.

So wird nach der Erfindung vorgeschlagen, daß die Metallkonstruktion aus lösbar oder unlösbar miteinander verbundenen Stahlteilen und lösbar damit verbunden Leichtmetallteilen besteht. Gerade bei Fahrgastsitzen spielt das Gewicht, da dies als Totgewicht anzusehen ist, neben der Festigkeit der Sitze eine entscheidende Rolle. Daher und auch aus Wirtschaftlichkeitsgründen werden gerade Fahrgastsitze in Mischbauweise hergestellt unter Verwendung sowohl von Stahlteilen wie auch von Leichtmetallteilen. Nach der Erfindung allerdings dürfen diese beiden verschiedenartigen Metalle nicht unlösbar, beispielsweise durch Schweißen oder Kleben miteinander verbunden sein, sondern lediglich durch einfach lösbare Verbindungsmittel.

Weiter wird vorgeschlagen, daß nur zwei Kunststoffarten - aufzuschäumendes Material und rigides Material - eingesetzt sind, und daß diese beiden Kunststoffarten nicht, allenfalls formschlüssig miteinander verbunden sind. Gerade die Aufarbeitung der in immer größerem Maße verwendeten Kunststoffe ließ die Aufarbeitung von derartigen Fahrgastsitzen unwirtschaftlich werden, da die unlösbar miteinander verbundenen Kunststoffe nicht recycelt werden konnten und daher zum Abfall gegeben werden mußten. Das Entfernen der miteinander verbundenen Kunststoffe aus den bisherigen Fahrgastsitzen war jedoch wirtschaftlich nicht vertretbar, so daß auch die weiteren Teile dieses Fahrgastsitzes, also auch die Metallteile zum Abfall wanderten.

Nach jetzigen Erkenntnissen sollten PU-Abkömmlinge und ABS-Polymerisate eingesetzt werden, da diese Kunststoffe weder bei der Herstellung noch beim Gebrauch oder bei der Abfallentsorgung die Umwelt belasten.

Schließlich soll auch das Gewebe über der Polsterung durch vorzugsweise bei den Gewebekanten angebrachte Befestigungsmittel - Haken/Ösen (Haken-/Ösen-Leisten), Knöpfe (Knopfleisten) - Klettverschlüsse - lösbar am Sitz-/Rückenteil angebracht sein. Dadurch wird nicht nur eine einfache Auswechslung dieses Gewebes möglich, sondern insbesondere eine Auswechslung, bei der weder der Fahrgastsitz im Gesamten noch Teile hiervon demontiert werden müssen. Das Auswechseln verschlissener oder sonstwie beschädigter Stoffbahnen ist daher nicht nur auf einfache Weise, sondern auch äußerst kostengünstig möglich. Die verschlissenen Gewebeteile können, nachdem gegebenenfalls die Befestigungsmittel abgetrennt wurden, dem Recycling zugeführt werden.

Insgesamt ergibt sich bei Beachtung der erfindungsgemäßen Maßnahmen ein Fahrgastsitz, der insgesamt oder auch in einzelnen Teilen wiederverwendbar oder recycelbar ist.

## Patentansprüche

1. Fahrgastsitz zur Bestuhlung von Personenbeförderungs-Fahrzeugen, bestehend aus den zusammenzufügenden Baugruppen Untergestell - Sitzteil - Rückenlehne, wobei, bei Einfachsitzen, auch die beiden Baugruppen, Sitzteil und Rückenlehne, einstückig zu einer Sitzschale zusammengefaßt sein können und wobei Sitzteil und Rückenlehne mit einer Polsterung zu versehen sind,
dadurch gekennzeichnet,
daß nur die geringstmögliche Anzahl der entsprechend dem Gebrauchszweck verwendeten Materialien - Metall-Kunststoff-Gewebe - eingesetzt ist und nur gleichartige Materialien unlösbar miteinander verbunden sind, wobei die Metallkonstruktion aus lösbar oder unlösbar miteinander verbundenen Stahlteilen und lösbar damit verbundenen Leichtmetallteilen besteht,
wobei nur zwei Kunststoffarten - aufzuschäumendes Material und rigides Material - eingesetzt sind und daß diese beiden Kunststoffarten nicht, allenfalls formschlüssig, miteinander verbunden sind
und wobei das Gewebe über der Polsterung durch vorzugsweise bei den Gewebekanten angebrachte Befestigungsmittel - Haken/Ösen (Haken-/Ösen-Leisten), Knöpfe (Knopfleisten)- Klettverschlüsse etc. - lösbar am Sitz-/Rückenteil angebracht ist.

2. Fahrgastsitz nach Anspruch 1,
dadurch gekennzeichnet,
daß die beiden Kunststoffarten ein PU-Abkömmling und ein ABS-Polymerisat sind.

## Claims

1. A passenger seat for the seating of vehicles for carrying passengers, comprising the structural groups to be assembled consisting of a support frame structure, a seat portion and a backrest, wherein, in the case of single seats, the two structural groups, the seat portion and the backrest, can also be integrally assembled to form a seat shell and wherein the seat portion and the backrest are to be provided with upholstery, characterised in that only the minimum possible number of the materials employed according to the purpose of use - metal - plastics material-fabric - is used and only similar materials are non-releasably connected together wherein the metal construction comprises steel members which are releasably or non-releasably connected together and light metal or alloy members which are releasably connected thereto, wherein only two kinds of plastics material - material to be foamed up and rigid material - are used, and that said two kinds of plastics materials are not or at most form-lockingly connected together, and wherein the fabric over the upholstery is releasably fitted to the seat/back portion by fixing means which are preferably disposed at the fabric edges - hooks/eyes (hook/eye-strips), buttons (button strips) - hook-and-loop fasteners etc.

2. A passenger seat according to claim 1 characterised in that the two kinds of plastics materials are a PU-derivative and an ABS-polymer.

## Revendications

1. Siège de passager pour équiper des véhicules de transport de personnes, constitué des sous-groupes respectifs de châssis, de partie d'assise et de dossier à assembler entre eux, les deux groupes de partie d'assise et de dossier pouvant aussi être réunis en une coque d'assise d'un seul tenant dans le cas de sièges simples, et la partie d'assise et le dossier devant être pourvus d'un rembourrage, **caractérisé** en ce qu'on ne met en oeuvre que le nombre minimal possible de matériaux utilisés conformément à l'usage recherché (métal, matière plastique, tissu) et on n'assemble entre eux de manière indétachable que des matériaux de même type, l'ossature métallique étant constituée d'éléments en acier assemblés entre eux de manière détachable ou indétachable et d'éléments en métal léger assemblés de manière détachable aux éléments en acier, seuls deux types de matières plastiques (matériau moussant et matériau rigide) étant utilisés et ces deux types de matières plastiques n'étant pas assemblés entre eux, ou tout au plus par épousement de formes, et le tissu recouvrant le rembourrage étant fixé de manière détachable sur la partie d'assise et/ou de dossier par des moyens de fixation - crochets/oeillets (barrettes à crochets/à oeillets), boutons (barrettes à boutons), rubans agrippants, etc. - qui sont de préférence disposés sur les bords du tissu.

2. Siège de passager selon la revendication 1, **caractérisé** en ce que les deux types de matières plastiques sont un dérivé de polyuréthane et un polymère ABS.
